# EUROPEAN PATENT SPECIFICATION

(11) **EP 4 450 929 B1**
(45) Date of publication and mention of the grant of the patent: **08.07.2026**
(21) Application number: 24170207.5
(22) Date of filing: 15.04.2024
(51) Int. Cl.: G01G 3/12, G01G 19/08, G01G 19/12, G01G 19/52, G01G 21/23

(54) **TOP MODULE COMPRISING WEIGHING DEVICE AND METHOD FOR WEIGHING AN OBJECT PLACED ON A TOP MODULE**
AUFSATZMODUL MIT WIEGEVORRICHTUNG UND VERFAHREN ZUM WIEGEN EINES AUF EINEM AUFSATZMODUL POSITIONIERTEN OBJEKTS
MODULE SUPÉRIEUR COMPRENANT UN DISPOSITIF DE PESAGE ET PROCÉDÉ DE PESAGE D'UN OBJET PLACÉ SUR UN MODULE SUPÉRIEUR

(30) Priority: 21.04.2023 DK PA202300342
(43) Date of publication of application: 23.10.2024
(73) Proprietor: Nord Modules A/S, 5260 Odense S (DK)
(72) Inventor: Kvistgaard, Kristian, 5750 Ringe (DK)
(74) Representative: Andreasen, Søren Laursen Vasegaard

(56) References cited:
- EP-A1- 3 712 102

## Description

### Field of invention

The present invention relates to a robot system comprising a mobile robot and a top module.

The present invention also relates to a method for weighing an object placed on a top module.

### Prior art

Top modules are designed for being used together with mobile robots in order to increase the areas of use. Some top modules are referred to as lift modules. This kind of modules are constructed to elevate objects resting on the top plate of the top module.

Different kind of top modules are known. CN111942097 A1 discloses a mobile robot, comprising a chassis, a weighing assembly and a suspension assembly. The weighing assembly is arranged above the chassis, and the two suspension assemblies are respectively arranged on both sides of the chassis. The mobile robot is, however, complex and requires reinforced structures to avoid that a load provided close to a side portion causes the top plate to tilt.

EP3771955 A1 discloses an autonomous mobile robot (AMR) and a method for operating an AMR. The AMR comprises a plurality of strain gauges that are provided on the AMR. The AMR is expensive and complex to manufacture, it would be desirable to have an alternative approach for weighing objects carried by an AMR.

US2017364073 A1 discloses a method of transporting a load to a deposit destination by a first robot having a first motive mechanism, and a second robot having a second motive mechanism that is independently operable from the first motive mechanism. The method comprising the first robot receiving a first instruction to satisfy an objective of transporting the load to the destination and working to accomplish the objective without acting upon any subsequent instruction as to how to transport the load to the destination. It would be desirable to have an alternative approach for weighing objects carried by a mobile robot.

EP3712102 A1 discloses an autonomous omnidirectional drive unit intended for transporting goods in logistics centers. The device comprises a drive chassis equipped with parallel drive wheels, and a transport chassis supported on multiple caster wheels. The two chassis are connected via a rotary joint enabling relative rotation about a vertical axis. A rotary motor, together with a control device, allows for coordinated actuation of the drive wheels and the rotary joint to achieve omnidirectional movement. The system further includes a raisable platform intended to lift racks or shelving units, and presence sensors, such as inductive sensors or cameras, for detecting the existence of a load above the platform.

However, EP3712102 A1 does not disclose or suggest any means for detecting or measuring the actual weight of the load. The disclosed sensors are limited to presence detection and cannot quantify load mass. Consequently, the system lacks functionality for overload prevention, weight-based task allocation, or dynamic motion control based on payload. These limitations are overcome by the present invention, which provides an integrated weighing device configured to detect the weight of an object arranged on the top module, enabling improved safety, efficiency, load management and is compact.

Other types of mobile robots having integrated weighing devices are known. These solutions are, however, only possible to use in limited amount of specific task.

Accordingly, it would be an advantage to a solution that is possible to use in a task independently manner.

Thus, there is a need for an alternative solution that reduces or even eliminates the above mentioned disadvantages of the prior art.

### Summary of the invention

The object of the present invention can be achieved by a robot system as defined in claim 1 and by a method as defined in claim 8.

Preferred embodiments are defined in the dependent subclaims, explained in the following description and illustrated in the accompanying drawings.

The top module according to the invention is a top module configured to be placed on and be mechanically attached to and electronically connected to a mobile robot, said top module comprising attachment structures for attaching the top module to the mobile robot, wherein the top module comprises an integrated weighing device configured to detect the weight of an object arranged on the top module.

Hereby, it is possible to detect and use the weight as a parameter required to carry out additional steps. It is possible to transport objects in different patterns depending on the total load of the top module or to take specific actions on the basis of the detected weight.

The top module according to the invention is a top module configured to be placed on and be mechanically attached to and electronically connected to a mobile robot. In an embodiment, the mobile robot is an automatic guided vehicle (AGV) e.g. an unmanned guided vehicle that moves throughout a facility by following a set of predetermined paths. In an embodiment, the mobile robot is an autonomous mobile robot (AMR) that enabled to collaborate in material handling tasks with humans.

The top module comprises attachment structures for attaching the top module to the mobile robot. In an embodiment, the top module comprises attachment structures formed as threaded holes configured to receive a bolt, screw or threaded rod.

The top module comprises an integrated weighing device configured to detect the weight of an object arranged on the top module. By the term "integrated" is meant mechanically attached to. The integrated weighing device would typically also be electrically connected to the top module.

In an embodiment, the weighing device comprises a plurality of spaced apart weighing units.

In an embodiment, the weighing device comprises two spaced apart weighing units.

In an embodiment, the weighing device comprises three spaced apart weighing units.

In an embodiment, the weighing device comprises four spaced apart weighing units.

In an embodiment, the weighing device comprises six spaced apart weighing units.

In an embodiment, the weighing device comprises eight spaced apart weighing units.

In an embodiment, the weighing device comprises more than eight spaced apart weighing units.

In an embodiment, the top module comprises a rectangular bottom plate.

In an embodiment, the top module is configured to be detachably attached to a mobile robot.

In an embodiment, the top module is configured to be detachably attached to several types of mobile robots.

In an embodiment, the top module comprises a rectangular bottom plate, wherein a weighing unit is arranged in each corner portion of the bottom plate.

In an embodiment, the top module comprises a rectangular bottom plate, wherein one or more weighing units are arranged in a central area of the bottom plate.

In an embodiment, each weighing unit comprises a strain gauge arranged a mounting structure in such a manner that upon loading the top module, the strain gauge can be displaced relative to the mobile robot.

In an embodiment, each weighing unit comprises a strain gauge arranged a mounting structure in such a manner that upon loading the top module, a portion of the strain gauge can be displaced towards the mobile robot.

In an embodiment, the height difference between the top module with an integrated weighing device and the top module without an integrated weighing device is less than 4 cm.

In an embodiment, the height difference between the top module with an integrated weighing device and the top module without an integrated weighing device is less than 3 cm.

According to the invention, the height difference between the top module with an integrated weighing device and the top module without an integrated weighing device is less than 2 cm.

In an embodiment, the height difference between the top module with an integrated weighing device and the top module without an integrated weighing device is less than 1 cm.

In an embodiment, the height difference between the top module with an integrated weighing device and the top module without an integrated weighing device is less than 0.5 cm.

In an embodiment, the weighing units are attached by means of the attachment structures.

In an embodiment, the weighing units are attached by means of the attachment structures formed as screws, bolts or threaded rods.

In an embodiment, each weighing unit comprises a fixed portion that is fixed to the mobile robot by means of a screw member extending through a throughbore provided in the fixed portion.

In an embodiment, each weighing unit comprises a fixed portion that is fixed to the mobile robot by means of a screw member extending through a throughbore provided in the fixed portion, wherein each weighing unit comprises a slidably mounted portion that is mounted in a non-zero distance above the mobile robot.

In an embodiment, a resilient member is provided between the fixed portion and the slidably mounted portion.

In an embodiment, a flexible member is provided between the fixed portion and the slidably mounted portion.

In an embodiment, each weighing unit comprises an elastic deformably mounted portion that is mounted in a non-zero distance above the mobile robot.

In an embodiment, a resilient member is provided between the fixed portion and the elastic deformably mounted portion.

In an embodiment, a flexible member is provided between the fixed portion and the elastic deformably mounted portion.

The robot system according to the invention is a robot system comprising a mobile robot and a top module according to the invention. The method according to the invention is a method for weighing an object placed on a top module that is placed on and attached to a mobile robot, wherein said top module comprising one or more attachment structures for attaching the top module to the mobile robot, Wherein the method comprising:
- arranging the object on the top module and
- applying an integrated weighing device to detect the weight of the object.

In an embodiment, the weighing device comprises a plurality of spaced apart weighing units.

In an embodiment, the top module comprises a rectangular bottom plate, wherein a weighing unit is arranged in each corner portion of the bottom plate.

In an embodiment, each weighing unit comprises a strain gauge arranged a mounting structure in such a manner that upon loading the top module, the strain gauge can be displaced relative to the mobile robot.

According to the invention, the height difference between the top module with an integrated weighing device and the top module without an integrated weighing device is less than 2 cm.

In an embodiment, the weighing units are attached to the top module by using the attachment structures.

In an embodiment, the weighing units are attached to the top module by using attachment structures shaped as screws, bolts or threaded rods.

In an embodiment, each weighing unit comprises a fixed portion that is fixed to the mobile robot by using a screw member extending through a throughbore provided in the fixed portion, wherein each weighing unit comprises a slidably mounted portion mounted in a non-zero distance above the mobile robot.

In an embodiment, a resilient member is provided between the fixed portion and the slidably mounted portion.

In an embodiment, a flexible member is provided between the fixed portion and the slidably mounted portion.

### Description of the Drawings

The invention will become more fully understood from the detailed description given herein below. The accompanying drawings are given by way of illustration only, and thus, they are not limitative of the present invention. In the accompanying drawings:
- Fig. 1A: shows a side view of a top module according to the invention mounted on a mobile robot;
- Fig. 1B: shows a bottom view of the top module shown in Fig. 1A;
- Fig. 2A: shows a schematic cross-sectional view of a top module according to the invention arranged above a mobile robot;
- Fig. 2B: shows a schematic cross-sectional view of a top module according to the invention attached to a mobile robot;
- Fig. 3A: shows a bottom view of a top module according to the invention;
- Fig. 3B: shows a cross-sectional close-up view of a weighing device of a top module according to the invention;
- Fig. 4A: shows a top view of a weighing device of a top module according to the invention;
- Fig. 4B: shows a perspective view of the weighing device shown in Fig. 4A;
- Fig. 4C: shows side view of the weighing device shown in Fig. 4A;
- Fig. 5A: shows a top module according to the invention mounted on a mobile robot;
- Fig. 5B: shows the top module shown in Fig. 5A carrying a box;
- Fig. 6A: shows a top module according to the invention mounted on a mobile robot;
- Fig. 6B: shows the top module shown in Fig. 6A carrying a pallet
- Fig. 7A: shows a top view of a weighing device of a top module according to the invention;
- Fig. 7B: shows a perspective view of the weighing device shown in Fig. 7A;
- Fig. 7C: shows a cross-sectional close-up view of a weighing device of a top module according to the invention;
- Fig. 8A: shows a schematic cross-sectional view of a top module according to the invention arranged above a mobile robot and
- Fig. 8B: shows a schematic cross-sectional view of a top module according to the invention attached to a mobile robot.

### Detailed description of the invention

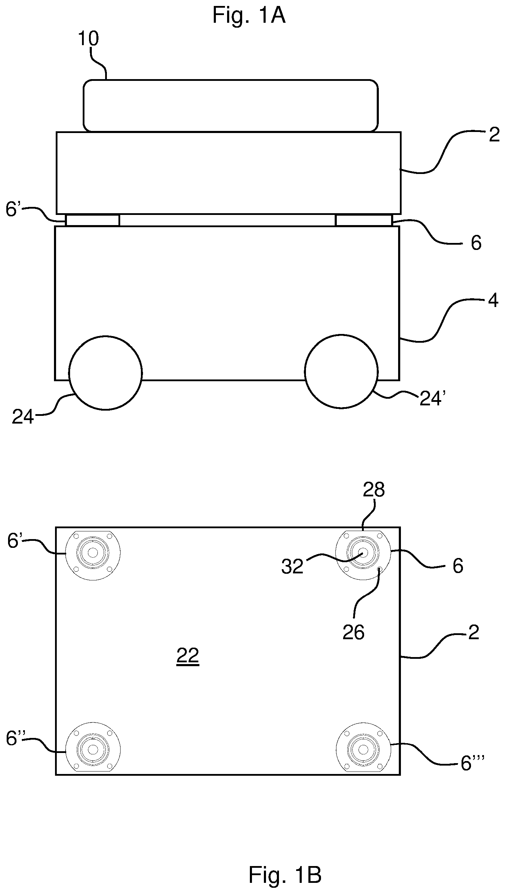

Referring now in detail to the drawings for the purpose of illustrating preferred embodiments of the present invention, a top module 2 of the present invention is illustrated in Fig. 1A.

Fig. 1A illustrates shows a side view of a top module 2 according to the invention mounted on a wheeled mobile robot 4. The top module 2 is mechanically and electronically connected to the mobile robot 4. The mobile robot 4 comprises ground-engaging wheels 24, 24'.

The top module 2 comprises a top surface configured to receive one or more objects 10. It can be seen that the top module 2 is carrying an object 10 that is placed on the top surface of the top module 2.

The top module 2 is configured to be placed on and be mechanically attached and electronically connected to the mobile robot 4. The top module 2 comprises sever integrated weighing devices 6, 6' configured to detect the weight of the object 10 arranged on the top module 2.

Each weighing device 6, 6' is:
a) mechanically attached to the bottom portion of the top module 2 by using first attachment elements (not shown) and
b) mechanically attached to the top portion of the mobile robot 4 by using second attachment elements (not shown).

Fig. 1B illustrates a bottom view of the top module 2 shown in Fig. 1A. The top module 2 comprises four weighing devices 6, 6', 6", 6‴ attached to a rectangular bottom plate 22.

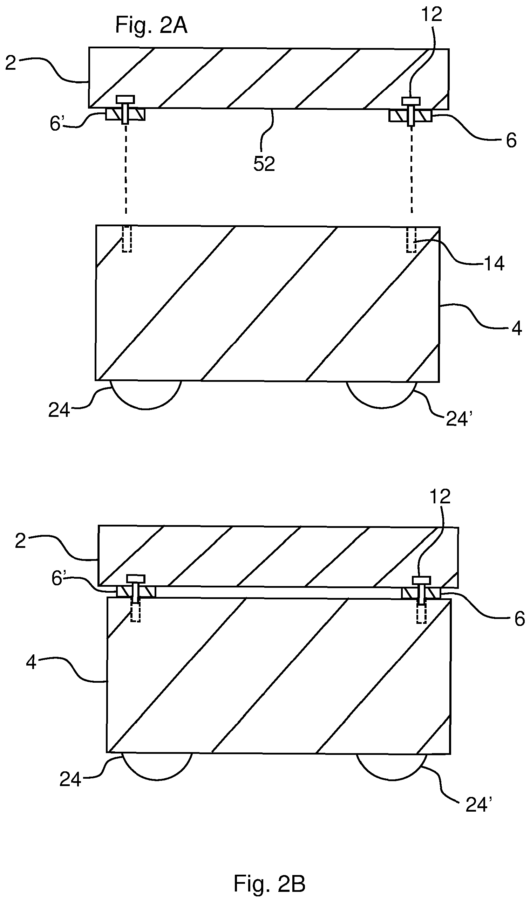

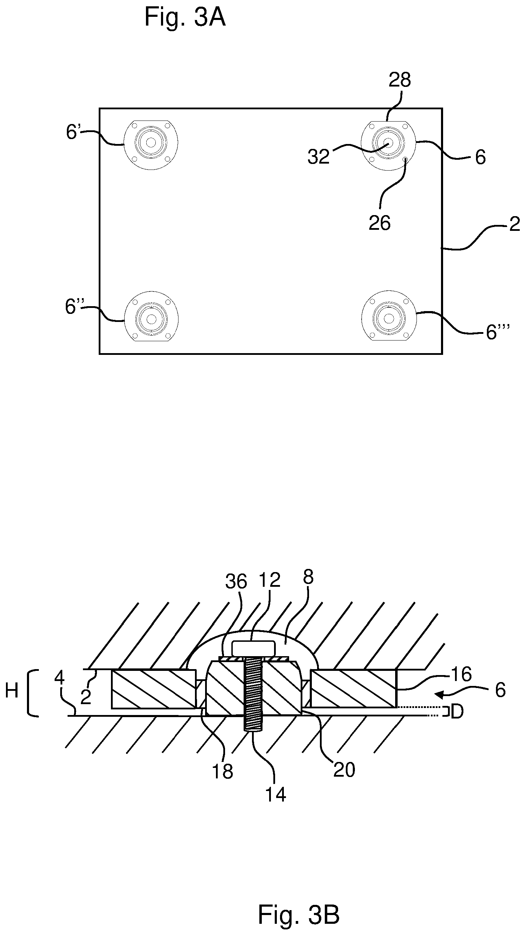

One weighing device 6, 6', 6", 6‴ is arranged in each corner portion of the bottom portion of the top module 2. Each weighing device 6, 6', 6", 6‴ comprises a plurality of holes 26 for attaching the weighing device 6, 6', 6", 6‴ to the top module 2. Each weighing device 6, 6', 6", 6‴ comprises a centrally arranged throughbore 32 designed for attaching the weighing device 6, 6', 6", 6‴ to a mobile robot (see Fig. 2A, Fig. 2B and Fig. 3B). Each weighing device 6, 6', 6", 6‴ comprises a housing formed as a portion of a cylindrical structure (having a circular cross section). A planar surface 28 is, however, provided by cutting away a portion of the circle. The planar surface 28 extends along the axial axis of the cylinder and perpendicular a radius of the circle. Accordingly, the planar surface 28 of the housing can be arranged close to a side portion of the top module.

Fig. 2A illustrates a schematic cross-sectional view of a top module 2 according to the invention arranged above a wheeled mobile robot 4. The mobile robot 4 comprises several ground engaging wheels 24, 24'. The top module 2 comprises a bottom surface 52 that typically is planar.

The top module 2 comprises several weighing devices 6, 6' each being mechanically attached to the top module 2. The attachment is typically established by using screws extending through holes in each weighing device 6, 6', wherein said screws extend further into threaded holes provided in the bottom surface 52 of the top module 2. A screw (or bolt) 12 extends through a throughbore in each weighing device 6, 6'.

The mobile robot 4 is provided with mounting structures 14 formed as threaded holes arranged and configured to receive the corresponding screws 12. Accordingly, each screw 12 is arranged and configured to be screwed into the corresponding mounting structure (threaded hole) 14 in the mobile robot 4. A more detailed view can be seen in Fig. 3B.

Fig. 2B illustrates a schematic cross-sectional view of the top module shown in Fig. 2A attached to the mobile robot 4 shown in Fig. 2A. The screws 12 have been screwed into the threaded holes 14. Accordingly, the

Fig. 3A illustrates a bottom view of a top module 2 according to the invention. The top module 2 basically corresponds to the one shown in and explained with reference to Fig. 1B. The weighing devices 6, 6', 6", 6‴ are, however, arranged in a larger distance from the edges of the top module 2. It can be seen that there is a non-zero distance between the planar surface 28and the adjacent parallel side portion of the top module 2.

Fig. 3B illustrates a cross-sectional close-up view of a weighing device 6 of a top module 2 according to the invention. The weighing device 6 comprises a slidably mounted portion 16 that surrounds a resilient or flexible member 18 that surrounds a fixed portion 20.

The fixed portion 20 is attached to the underlying mobile robot 4 by using a screw 12 that is screwed into a threaded hole 14 provided in the top portion of the mobile robot 4. Optionally a washer 36 is provided between the head of the screw 12 and the top portion of the fixed portion 20.

The top module 2 is provide with a cavity 8 configured to receive a central portion of the weighing device 6, which central portion protrudes from the uppermost part of the slidably mounted portion 16. It can be seen that the uppermost portion of the fixed portion 20 and the head portion of the screw 12 protrudes from the level of the uppermost part of the slidably mounted portion 16 into the cavity 8.

When an object is placed on the top of the top module 2, the top module 2 is displaced slightly downwards due to the resilience of flexibility of the resilient or flexible member 18. The degree of the displacement is determined by the weight of the object. In an embodiment, the weighing device 6 is formed as a strain gauge configured to measure electrical resistance due to changes in strain (deformation or displacement) of a portion of the weighing device 6.

It can be seen that a the slidably mounted portion 16 is mounted in a non-zero distance D above the uppermost surface of the mobile robot 4.

According to the invention, the height difference between the top module 2 with the integrated weighing device 6 and the top module 2 without the integrated weighing device 6 is less than 2 cm. This can be accomplished by ensuring that the indicated height H is less than 2 cm.

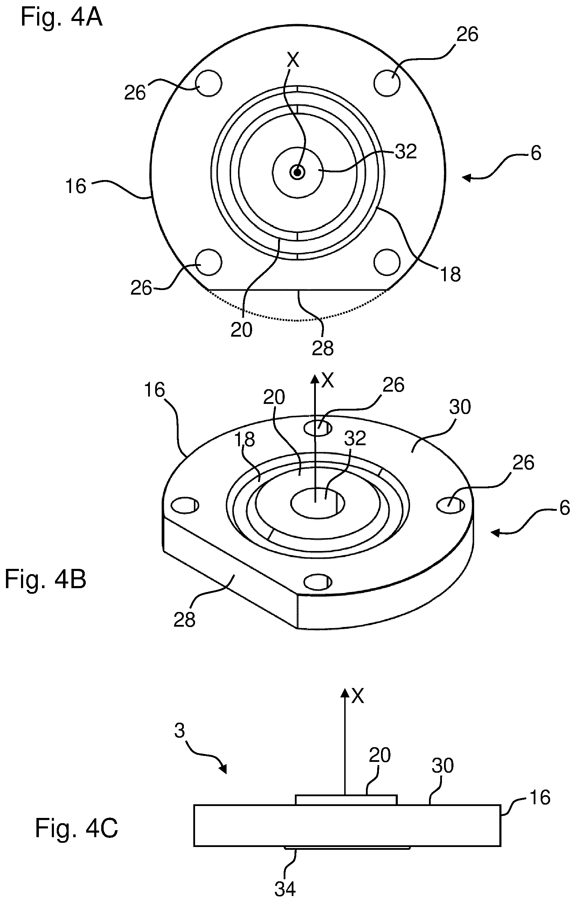

Fig. 4A illustrates a top view of a weighing device 6 of a top module 6 according to the invention. The weighing device 6 basically corresponds to the one shown in and explained with reference to Fig. 3B. Fig. 4B illustrates a perspective view of the weighing device 6 shown in Fig. 4A. It can be seen that the weighing device 6 comprises a housing shaped as a cylindrical body that has been cut along a plane extending perpendicular to a radius of the cylinder and along a plane extending parallel to the longitudinal axis X of the cylinder. The cut-away portion is indicated by a dotted line.

The weighing device 6 comprises a plurality of holes 26 for attaching the weighing device 6 to a top module (as shown in Fig. 3B). The weighing device 6 comprises a centrally arranged throughbore 32 designed for attaching the weighing device 6 to a mobile robot (see Fig. 2A, Fig. 2B and Fig. 3B).

The weighing device 6 comprises a slidably mounted portion 16 that surrounds a resilient or flexible member 18 surrounding a fixed portion 20. In an embodiment, the weighing device 6 comprises four holes 26 evenly distributed along the periphery of the slidably mounted portion 16.

The fixed portion 20 is configured to be attached to an underlying mobile robot 4 by using a screw that is screwed into a threaded hole provided in the top portion of the mobile robot like illustrated in Fig. 3B.

In Fig. 4C it can be seen that the fixed portion 20 is provided with a planar support surface 34 that protrudes from the lowermost surface of the slidably mounted portion 16. This means that when the planar support surface 34 rests on the mobile robot (as show in Fig. 3B), there will be a gap between the bottom side of the slidably mounted portion 16 and the mobile robot.

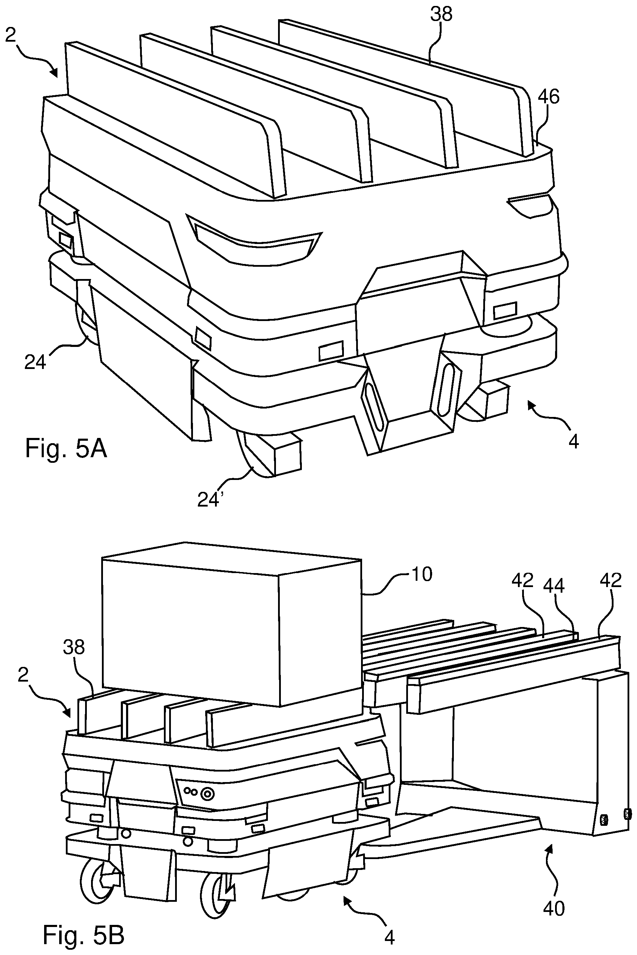

Fig. 5A illustrates a top module 2 according to the invention mounted on a mobile robot 4. The mobile robot 4 is equipped with four wheels 24, 24'. The top module 2 comprises an upper surface 46 and a plurality of ridges 38 protruding therefrom.

Fig. 5B illustrates the top module 2 shown in Fig. 5A carrying a box 10. The top module 2 is placed next to a gate 40 having a plurality of spaced apart gate bars 42. A slot 44 is provided between the adjacent gate bars 42. The ridges 38 of the top module 2 are spaced from each other and adapted to be received by the slots 44.

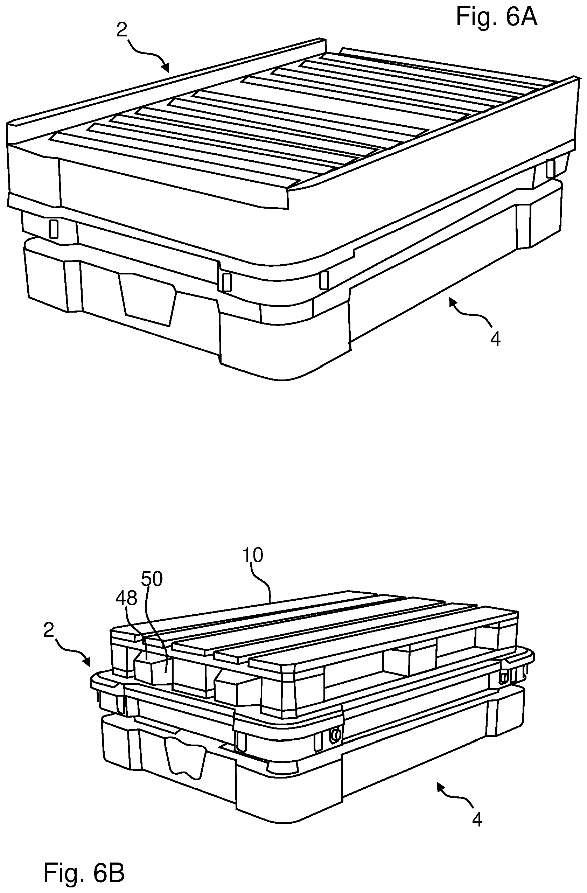

Fig. 6A illustrates a top module 2 according to the invention mounted on a mobile robot 4.

Fig. 6B illustrates the top module 2 shown in Fig. 6A carrying a pallet 10. The top module 2 comprises two parallel spaced apart elongated contact structures 48 designed to be received by the longitudinal openings 50 of the pallet 10.

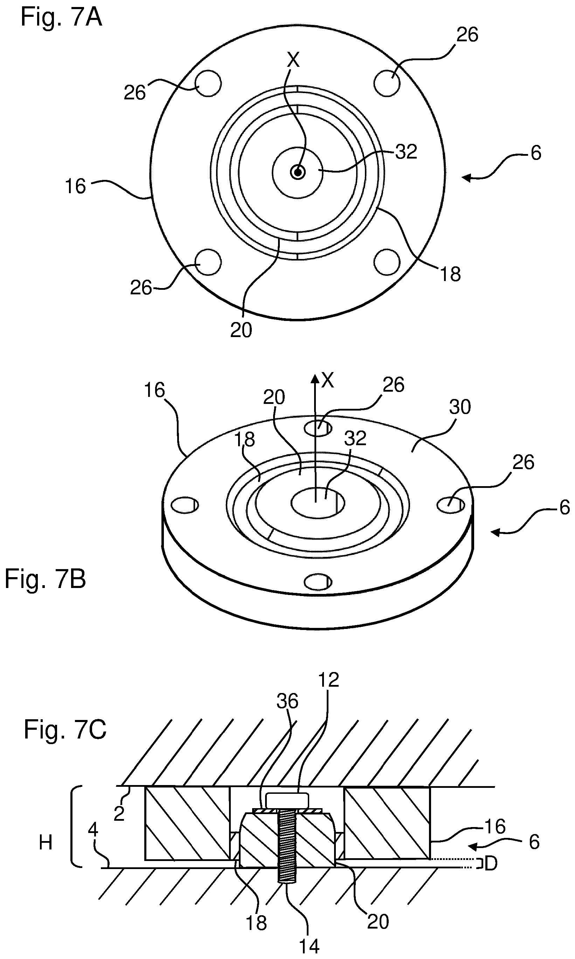

Fig. 7A illustrates a top view of a weighing device 6 of a top module according to the invention. Fig. 7B illustrates a perspective view of the weighing device 2 shown in Fig. 7A. The weighing device 6 basically corresponds to the one shown in and explained with reference to Fig. 4A and Fig. 4B. The slidably mounted portion 16, however, is cylindrical with a circular cross section since not portion has been cut away like in Fig. 4A and Fig. 4B.

Fig. 7C illustrates a cross-sectional close-up view of a weighing device 6 of a top module 2 according to the invention. The weighing device 6 comprises a slidably mounted portion 16 that surrounds a resilient or flexible member 18 that surrounds a fixed portion 20.

The fixed portion 20 is attached to the underlying mobile robot 4 by using a screw 12 that is screwed into a threaded hole 14 provided in the top portion of the mobile robot 4. A washer 36 is typically provided between the head of the screw 12 and the top portion of the fixed portion 20.

The top module 2 does not comprise a cavity like shown in Fig. 3B. The uppermost portion of the fixed portion 20 and the head portion of the screw 12 does not protrudes from the level of the uppermost part of the slidably mounted portion 16. On the contrary, the top portion of the slidably mounted portion 16 is provided in a higher level than the uppermost portion of the fixed portion 20 and the head portion of the screw 12. Therefore, no cavity is required in the lover portion of the top module 2.

When an object is placed on the top of the top module 2, the top module 2 is displaced slightly downwards due to the resilience of flexibility of the resilient or flexible member 18. The degree of the displacement is determined by the weight of the object. In an embodiment, the weighing device 6 is formed as a strain gauge configured to measure electrical resistance due to changes in strain (deformation or displacement) of a portion of the weighing device 6.

The slidably mounted portion 16 is mounted in a non-zero distance D above the uppermost surface of the mobile robot 4.

In a preferred embodiment, the height difference between the top module 2 with the integrated weighing device 6 and the top module 2 without the integrated weighing device 6 is less than 2 cm. This can be accomplished by ensuring that the indicated height H is less than 2 cm.

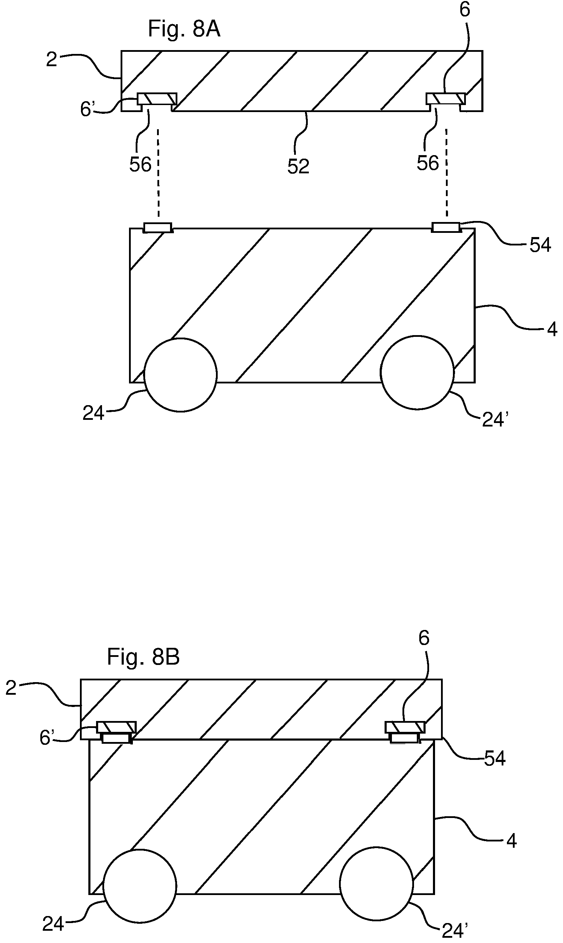

Fig. 8A illustrates a schematic cross-sectional view of a top module 2 according to the invention arranged above a mobile robot 4. Fig. 8B illustrates a schematic cross-sectional view of a top module 2 according to the invention attached to a mobile robot 4.

The top module 2 comprises several spaced apart integrated weighing devices 6, 6'. The integrated weighing devices 6, 6' are arranged above the bottom surface 52 of the top module 2. Accordingly an opening 56 is arranged below the integrated weighing devices 6, 6'.

The mobile robot 4 comprises a transfer structure 54 for each opening 56. As it can be seen in Fig. 8B, each transfer structure 54 is brought into contact with a bottom side of a corresponding weighing device 6, 6'. When an object is placed on the top module 2, the integrated weighing devices 6, 6' will be pressed towards the transfer structures 54 and the weighing devices 6, 6' will detect the weight of the object.

### List of reference numerals

- 2: Top module
- 4: Mobile robot
- 6, 6', 6", 6‴: Weighing device
- 8: Cavity
- 10: Object
- 12: Attachment structure
- 14: Mounting structure (e.g. a hole)
- 16: Slidably mounted portion
- 18: Resilient or flexible member
- 20: Fixed portion
- 22: Bottom plate
- 24, 24': Wheel
- D: Distance
- 26: Hole
- 28: Planar surface
- 30: Contact surface
- 32: Throughbore
- 34: Support surface
- 36: Washer
- 38: Ridge
- 40: Gate
- 42: Gate bar
- 44: Slot between adjacent gate bars
- 46: Upper surface
- 48: Contact structure
- 50: Opening
- 52: Bottom surface
- 54: Transfer structure
- 56: Opening
- H: Height
- X: Longitudinal axis

## Claims

1. Robot system comprising a mobile robot (4) and a top module (2) configured to be placed on and be mechanically attached to and electronically connected to the mobile robot (4), said top module (2) comprising attachment structures (12) for attaching the top module (2) to the mobile robot (4), wherein the top module (2) comprises an integrated weighing device (6, 6', 6", 6‴) configured to detect the weight of an object (10) arranged on the top module (2), **characterised in that** the integrated weighing device (6, 6', 6", 6‴) has a height (H) less than 2 cm.

2. Top module (2) according to claim 1, wherein the weighing device (6, 6', 6", 6"') comprises a plurality of spaced apart weighing units (6, 6', 6", 6‴)

3. Top module (2) according to claim 2, wherein the top module (2) comprises a rectangular bottom plate (22), wherein a weighing unit (6, 6', 6", 6"') is arranged in each corner portion of the bottom plate (22).

4. Top module (2) according to one of the preceding claims 2-3, wherein each weighing unit (6, 6', 6", 6‴) comprises a strain gauge (6, 6', 6", 6‴) arranged a mounting structure (14) in such a manner that upon loading the top module (2), the strain gauge (6, 6', 6", 6"') can be displaced relative to the mobile robot (4).

5. Top module (2) according to one of the preceding claims 2-4, wherein the weighing units (6, 6', 6", 6‴) are attached by means of the attachment structures (12).

6. Top module (2) according to claim 5, wherein each weighing unit (6, 6', 6", 6"') comprises a fixed portion (20) that is fixed to the mobile robot (4) by means of a screw member (12) extending through a bore provided in the fixed portion (20), wherein each weighing unit (6, 6', 6", 6‴) comprises a slidably mounted portion (16) that is mounted in a non-zero distance above the mobile robot (4).

7. Top module (2) according to claim 6, wherein a resilient or flexible member (18) is provided between the fixed portion (20) and the slidably mounted portion (16).

8. Method for weighing an object (10) placed on a top module (2) that is placed on and attached to a mobile robot (4), wherein said top module (2) comprising one or more attachment structures (12) for attaching the top module (2) to the mobile robot (4),
wherein the top module (2) comprises an integrated weighing device (6, 6', 6", 6"') configured to detect the weight of an object (10) arranged on the top module (2), wherein the method comprising:
- arranging the object (10) on the top module (2) and
- applying the integrated weighing device (6, 6', 6", 6"') to detect the weight of the object (10), **characterised in that** the integrated weighing device (6, 6', 6", 6‴) has a height (H) less than 2 cm.

9. Method according to claim 8, wherein the weighing device (6, 6', 6", 6‴) comprises a plurality of spaced apart weighing units (6, 6', 6", 6‴).

10. Method according to claim 8 or 9, wherein the top module (2) comprises a rectangular bottom plate (22), wherein a weighing unit (6, 6', 6", 6"') is arranged in each corner portion of the bottom plate (22).

11. Method according to one of the claims 8-10, wherein each weighing unit (6, 6', 6", 6‴) comprises a strain gauge (6, 6', 6", 6‴) arranged a mounting structure (14) in such a manner that upon loading the top module (2), the strain gauge (6, 6', 6", 6"') can be displaced relative to the mobile robot (4).

12. Method according to one of the claims 8-11**,** wherein the weighing units (6, 6', 6", 6‴) are attached by means of the attachment structures (12).

## Patentansprüche

1. Robotersystem, umfassend einen mobilen Roboter (4) und ein oberes Modul (2), das dafür konfiguriert ist, auf dem mobilen Roboter (4) platziert und mechanisch daran befestigt und elektronisch damit verbunden zu werden, wobei das obere Modul (2) Befestigungsstrukturen (12) zum Befestigen des oberen Moduls (2) am mobilen Roboter (4) umfasst, wobei das obere Modul (2) eine integrierte Wiegevorrichtung (6, 6', 6", 6"') umfasst, die dafür konfiguriert ist, das Gewicht eines auf dem oberen Modul (2) angeordneten Objekts (10) zu erfassen, **dadurch gekennzeichnet, dass** die integrierte Wiegevorrichtung (6, 6', 6", 6"') eine Höhe (H) von weniger als 2 cm aufweist.

2. Oberes Modul (2) nach Anspruch 1, wobei die Wiegevorrichtung (6, 6', 6", 6"') eine Vielzahl von voneinander beabstandeten Wiegeeinheiten (6, 6', 6", 6"') umfasst.

3. Oberes Modul (2) nach Anspruch 2, wobei das obere Modul (2) eine rechteckige Bodenplatte (22) umfasst, wobei in jedem Eckabschnitt der Bodenplatte (22) eine Wiegeeinheit (6, 6', 6", 6") angeordnet ist.

4. Oberes Modul (2) nach einem der vorhergehenden Ansprüche 2-3, wobei jede Wiegeeinheit (6, 6', 6", 6"') einen Dehnungsmessstreifen (6, 6', 6", 6"') umfasst, der auf einer Montagestruktur (14) auf eine solche Weise angeordnet ist, dass der Dehnungsmessstreifen (6, 6', 6", 6"') auf ein Belasten des oberen Moduls (2) hin relativ zum mobilen Roboter (4) verschoben werden kann.

5. Oberes Modul (2) nach einem der vorhergehenden Ansprüche 2-4, wobei die Wiegeeinheiten (6, 6', 6", 6") mittels der Befestigungsstrukturen (12) befestigt sind.

6. Oberes Modul (2) nach Anspruch 5, wobei jede Wiegeeinheit (6, 6', 6", 6"') einen festen Abschnitt (20) umfasst, der mittels eines Schraubenelements (12), das sich durch eine Bohrung erstreckt, die im festen Abschnitt (20) bereitgestellt wird, am mobilen Roboter (4) befestigt ist, wobei jede Wiegeeinheit (6, 6', 6", 6"') einen verschiebbar angebrachten Abschnitt (16) umfasst, der in einem Abstand ungleich Null über dem mobilen Roboter (4) angebracht ist.

7. Oberes Modul (2) nach Anspruch 6, wobei zwischen dem festen Abschnitt (20) und dem verschiebbar angebrachten Abschnitt (16) ein elastisches oder flexibles Element (18) bereitgestellt wird.

8. Verfahren zum Wiegen eines Objekts (10), das auf einem oberen Modul (2) platziert ist, das auf einem mobilen Roboter (4) platziert ist, wobei das obere Modul (2) eine oder mehrere Befestigungsstrukturen (12) zum Befestigen des oberen Moduls (2) am mobilen Roboter (4) umfasst, wobei das obere Modul (2) eine integrierte Wiegevorrichtung (6, 6', 6", 6"') umfasst, die dafür konfiguriert ist, das Gewicht eines auf dem oberen Modul (2) angeordneten Objekts (10) zu erfassen, wobei das Verfahren Folgendes umfasst:
- Anordnen des Objekts (10) auf dem oberen Modul (2) und
- Anwenden der integrierten Wiegevorrichtung (6, 6', 6", 6"'), um das Gewicht des Objekts (10) zu erfassen, **dadurch gekennzeichnet, dass** die integrierte Wiegevorrichtung (6, 6', 6", 6"') eine Höhe (H) von weniger als 2 cm aufweist.

9. Verfahren nach Anspruch 8, wobei die Wiegevorrichtung (6, 6', 6", 6"') eine Vielzahl von voneinander beabstandeten Wiegeeinheiten (6, 6', 6", 6"') umfasst.

10. Verfahren nach Anspruch 8 oder 9, wobei das obere Modul (2) eine rechteckige Bodenplatte (22) umfasst, wobei in jedem Eckabschnitt der Bodenplatte (22) eine Wiegeeinheit (6, 6', 6", 6") angeordnet ist.

11. Verfahren nach einem der Ansprüche 8-10, wobei jede Wiegeeinheit (6, 6', 6", 6‴) einen Dehnungsmessstreifen (6, 6', 6", 6"') umfasst, der auf einer Montagestruktur (14) auf eine solche Weise angeordnet ist, dass der Dehnungsmessstreifen (6, 6', 6", 6"') auf ein Belasten des oberen Moduls (2) hin relativ zum mobilen Roboter (4) verschoben werden kann.

12. Verfahren nach einem der Ansprüche 8-11, wobei die Wiegeeinheiten (6, 6', 6", 6") mittels der Befestigungsstrukturen (12) befestigt sind.

## Revendications

1. Système robotique comprenant un robot mobile (4) et un module supérieur (2) configuré pour être placé sur le robot mobile (4) et y être fixé mécaniquement et électroniquement connecté, ledit module supérieur (2) comprenant des structures de fixation (12) pour fixer le module supérieur (2) au robot mobile (4), dans lequel le module supérieur (2) comprend un dispositif de pesage intégré (6, 6', 6", 6"') configuré pour détecter le poids d'un objet (10) disposé sur le module supérieur (2), **caractérisé en ce que** le dispositif de pesage intégré (6, 6', 6", 6"') présente une hauteur (H) inférieure à 2 cm.

2. Module supérieur (2) selon la revendication 1, dans lequel le dispositif de pesage (6, 6', 6", 6"') comprend une pluralité d'unités de pesage espacées (6, 6', 6", 6‴)

3. Module supérieur (2) selon la revendication 2, dans lequel le module supérieur (2) comprend une plaque inférieure rectangulaire (22), dans lequel une unité de pesage (6, 6', 6", 6"') est disposée dans chaque coin de la plaque inférieure (22).

4. Module supérieur (2) selon l'une des revendications précédentes 2-3, dans lequel chaque unité de pesage (6, 6', 6", 6"') comprend une jauge de contrainte (6, 6', 6", 6‴) disposée sur une structure de montage (14) de telle sorte que, lors du chargement du module supérieur (2), la jauge de contrainte (6, 6', 6", 6"') puisse être déplacée par rapport au robot mobile (4).

5. Module supérieur (2) selon l'une des revendications précédentes 2-4, dans lequel les unités de pesage (6, 6', 6", 6"') sont fixées au moyen des structures de fixation (12).

6. Module supérieur (2) selon la revendication 5, dans lequel chaque unité de pesage (6, 6', 6", 6"') comprend une partie fixe (20) qui est fixée au robot mobile (4) au moyen d'un élément à vis (12) s'étendant à travers un alésage prévu dans la partie fixe (20), dans lequel chaque unité de pesage (6, 6', 6", 6"') comprend une partie montée coulissante (16) qui est montée à une distance non nulle au-dessus du robot mobile (4).

7. Module supérieur (2) selon la revendication 6, dans lequel un élément résilient ou flexible (18) est prévu entre la partie fixe (20) et la partie montée coulissante (16).

8. Procédé de pesage d'un objet (10) placé sur un module supérieur (2) lui-même placé sur un robot mobile (4) et fixé à celui-ci, dans lequel ledit module supérieur (2) comprend une ou plusieurs structures de fixation (12) permettant de fixer le module supérieur (2) au robot mobile (4), dans lequel le module supérieur (2) comprend un dispositif de pesage intégré (6, 6', 6", 6") configuré pour détecter le poids d'un objet (10) disposé sur le module supérieur (2), dans lequel le procédé comprend :
- la disposition de l'objet (10) sur le module supérieur (2) et
- l'application du dispositif de pesage intégré (6, 6', 6", 6"') pour détecter le poids de l'objet (10), **caractérisé en ce que** le dispositif de pesage intégré (6, 6', 6", 6"') présente une hauteur (H) inférieure à 2 cm.

9. Procédé selon la revendication 8, dans lequel le dispositif de pesage (6, 6', 6", 6‴) comprend une pluralité d'unités de pesage espacées (6, 6', 6", 6"').

10. Procédé selon la revendication 8 ou 9, dans lequel le module supérieur (2) comprend une plaque inférieure rectangulaire (22), dans lequel une unité de pesage (6, 6', 6", 6"') est disposée dans chaque coin de la plaque inférieure (22).

11. Procédé selon l'une des revendications 8-10, dans lequel chaque unité de pesage (6, 6', 6", 6"') comprend une jauge de contrainte (6, 6', 6", 6"') disposée sur une structure de montage (14) de telle sorte que, lors du chargement du module supérieur (2), la jauge de contrainte (6, 6', 6", 6"') puisse être déplacée par rapport au robot mobile (4).

12. Procédé selon l'une des revendications 8-11, dans lequel les unités de pesage (6, 6', 6", 6"') sont fixées au moyen des structures de fixation (12).
